# EUROPEAN PATENT APPLICATION

(11) **EP 2 337 359 A1**
(43) Date of publication of application: **22.06.2011**
(21) Application number: 10195690.2
(22) Date of filing: 17.12.2010
(51) Int. Cl.: H04N 9/31

(54) **Full visible gamut color video display**

(30) Priority: 18.12.2009 US 642574
(71) Applicant: Tektronix, Inc., Beaverton, Oregon 97077-0001 (US)
(72) Inventor: Ferguson, Kevin, Beaverton, Oregon 97008 (US)
(74) Representative: Clarke, Jeffrey

(57) **Abstract**

Embodiments of the invention use one or more tunable lasers to produce colors for display. The resultant displays may use one or more tunable lasers in conjunction with one or more static lasers, or in conjunction with conventional static color-producing technology. In such systems, colors from input video are determined, then Look Up Tables or other methods may be used to convert the input colors into signals used to drive the fixed and tunable lasers. These color-producing elements are then projected on a screen or otherwise used within a display for viewing. The resultant display has the capability of producing every or nearly every possible color discernable by the human eye.

## Description

The human eye is very sensitive to colors. Some studies indicate that it can distinguish between over 10 million different colors, well outperforming current technology that produces color displays, such as computer monitors, televisions, and projection systems.

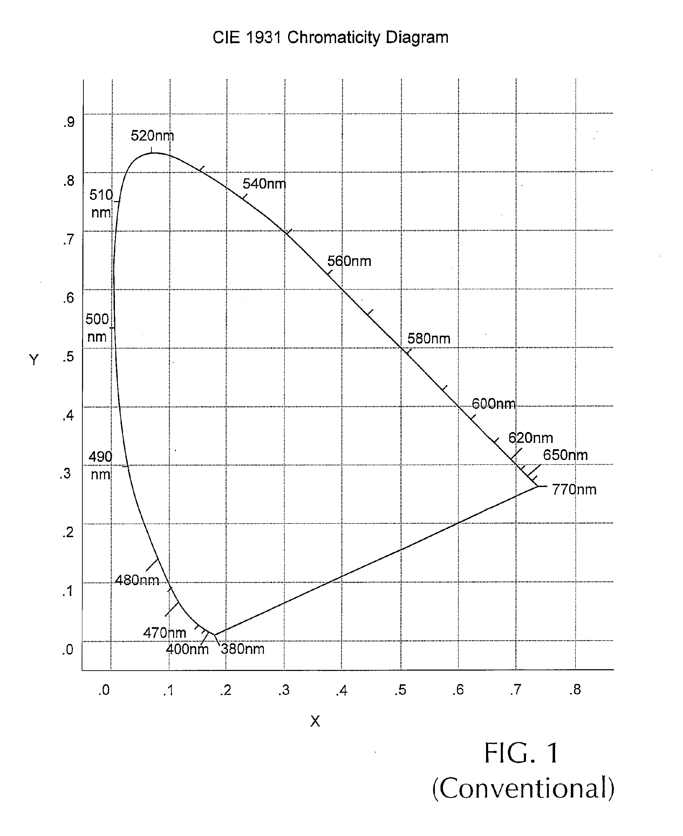

In 1931 the International Commission on Illumination, abbreviated as CIE because of its official French name of Commission internationale de l'éclairage, created a chromaticity diagram of colors viewable by the human eye, which has edges that represented monochromatic colors made from a single-wavelength of light. The chromaticity diagram is also referred to as CIE 1931 xy coordinates, as illustrated in FIG. 1. The upper edge of the "horseshoe" shape of FIG. 1 indicates the specific wavelengths of the monochromatic light used to create the adjacent fully saturated color.

Cinemas and movie production studios are leading a charge into digital projection for movie theaters for many reasons. In addition to a higher quality picture, especially compared to relatively fragile movie film that wears with each successive viewing, the cost of distributing movies in digital form is much less than bulky and heavy canisters of film that must be transported to and from the movie theaters.

To facilitate standards on digital distribution, the Digital Cinema Initiative (DCI) was created by several movie studios. In March of 2008, DCI released the latest standard that specifies an end-to-end video system, from production to display, all in the specified format and conventions. The DCI Specification version 1.2 is incorporated herein by reference, and is referred to herein as the DCI Specification.

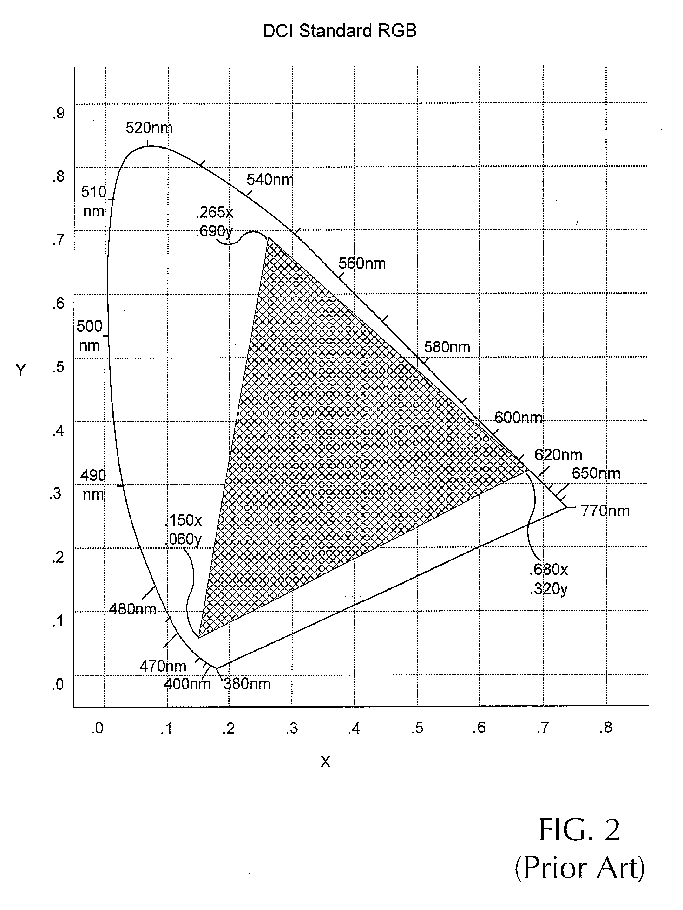

The color gamut of various display technologies or specifications is the limits of the producible or defined colors for the display technologies or specifications. FIG. 2 illustrates the gamut for the DCI Specification as a triangle with vertices for each of the primary display colors of Red, Green and Blue (RGB). In particular, the 1931 CIE xy coordinates for the corners of the DCI Specification gamut are (.680, .320), (.265, .690), and (.150, .060), for Red, Green, and Blue, respectively. Although the color gamut of the DCI specification is large, and generally larger than color gamuts of typical CRT devices (not illustrated), it leaves out many of the colors that the human eye can perceive.

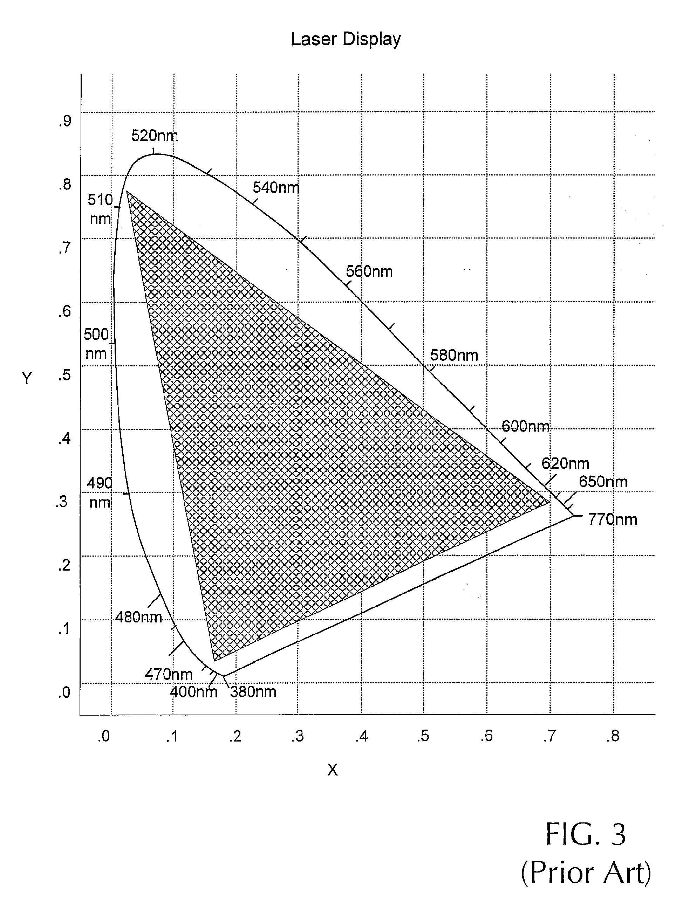

Laser based displays are among the widest color gamut video displays available, as lasers typically produce light at a specific wavelength, thus yielding saturated light. For instance, with reference to FIG. 3, using lasers to generate the colors for a particular display yields a very wide color gamut, with monochromatic light at each of the RGB vertices. Even this embodiment, however, leaves out many of the colors that the human eye can perceive, particularly at the edges of the diagram, where the color is most saturated.

Embodiments of the invention address these and other limitations of the prior art.

### BRIEF DESCRIPTION OF THE DRAWINGS

FIG. 1 is a graph of the 1931 CIE xy chromaticity diagram as is known in the art.

FIG. 2 is a graph of the known DCI Specification color gamut mapped on to the chromaticity diagram of FIG. 1.

FIG. 3 is a graph of a known laser based display gamut mapped on to the chromaticity diagram of FIG. 1.

FIG. 4 is a graph of a color gamut for a display according to embodiments of the invention having a single tunable laser.

FIG. 5 is a graph illustrating multiple superimposed gamuts of the system according to FIG. 4.

FIG. 6 is a graph of a complete gamut of the display described with reference to FIG. 4 according to embodiments of the invention.

FIG. 7 is a graph of a color gamut for a display having two tunable lasers according to embodiments of the invention.

FIG. 8 is a graph of a color gamut for a display having a single fixed laser and a widely tunable laser according to embodiments of the invention.

FIG. 9 is a graph illustrating how to create desired colors from one or more tunable lasers according to embodiments of the invention.

FIG. 10 is a block diagram of a two laser system according to embodiments of the invention.

### DETAILED DESCRIPTION

Embodiments of the invention use tunable lasers to produce colors for display. As described below, the resultant displays may use one or more tunable lasers in conjunction with one or more static lasers, or in conjunction with conventional static color-producing technology. These color-producing elements are then projected on a screen or otherwise used within a display for viewing. The resultant display has the capability of producing every or nearly every possible color discernible by the human eye.

The color gamut limits of embodiments of the invention may be modulated by modifying the wavelength of one or more relatively pure light sources such as the red, green or blue light from lasers. Lasers may be modulated, or tuned, in various ways. Laser output may be modified by adjusting operating parameters such as current or voltage of the particular laser. Some laser modulation may be capable of modulating the laser wavelength only a few nanometers, while others may be tuned over a range of tens or hundreds of nanometers. The latter types of lasers are termed "widely tunable" lasers. One class of tunable lasers includes dye lasers, such as a laser using coumarin 545 tetramethyl dye as its gain medium and is tuned by a controllable diffraction grating. Another class of tunable lasers includes solid-state lasers, such as a Yb:YAG microchip laser that may be tuned by controlling a birefringent filter. In short, nearly any type of tunable light source that satisfies specified performance criteria may be used in embodiments of the invention. Criteria for commercial embodiments may also include size, cost of acquisition, cost of operation, power output, wavelength range, and agility also known as repetition rate.

Since the optimal trade-offs among cost, color gamut (& therefore color quality limits) and complexity depend on particular applications and since cost is a moving target, multiple alternative embodiments are presented as solutions to the given problem of extending color gamut in display technology. Some solutions come close to including the entire visible color gamut while others entirely include the visible color gamut.

Example 1: Standard Red, Pure Blue, Tunable Green

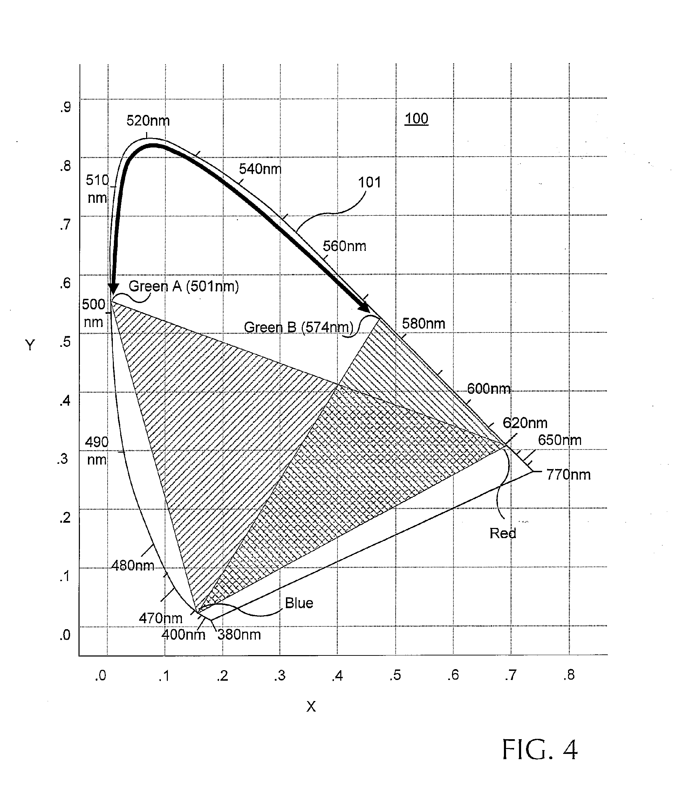

FIG. 4 is a graph 100 of a color gamut 101 for the components of the first example display. The components include a display component that produces standard red, such as a fixed red laser, any acceptable display component that produces pure blue, which can also be any acceptable component but is likely a fixed-point laser, and a tunable green laser. The green laser in this embodiment is tunable between approximately 501 nm and 574 nm. In actuality, these wavelengths are sensed by the human eye as a blueish green (501nm) and a greenish yellow (574nm). Wavelengths between these extremes are seen generally by the eye as saturated green. In this embodiment the red component may generate the exact red of the DCI Specification incorporated above. This complete gamut 101 includes substantially almost all visible colors, with the exception of some blue, purple, magenta and red near perfectly saturated colors located at the edge of the 1931 CIE chromaticity diagram between the blue vertex and the vertex labeled Green A. The colors below the blue-red line of FIG 4 may be rendered with commercial or military applications of this invention when the fixed wavelength lasers at the extremes of the visible spectrum become commercially available.

By changing the wavelength of green laser between vertices labeled Green A and Green B, all of the upper (green) area in the gamut 101 may be rendered. The wavelength may be modulated rapidly so that complete coverage is obtained. The green laser may be modulated in a manner described in US patent 7,027,471, which is incorporated by reference herein, or by other tunable methods described above. The modulation should be rapid enough to keep any color deviations below perceptual threshold across space and time.

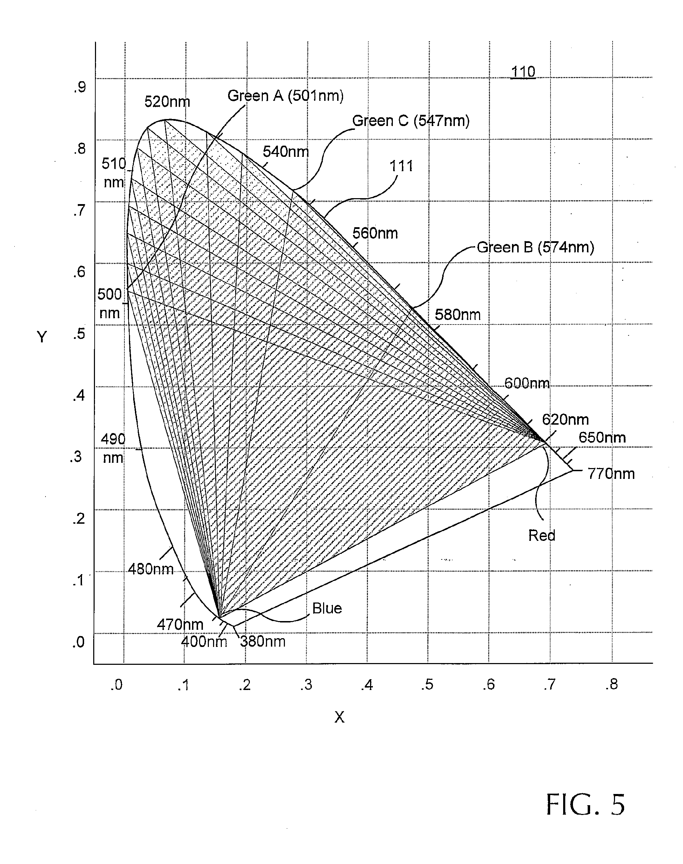

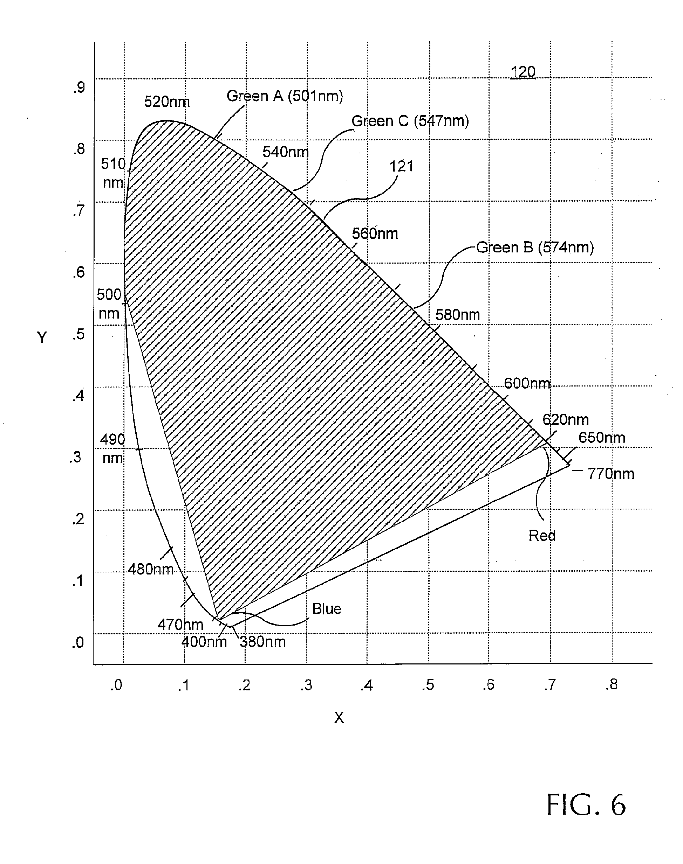

FIG. 5 is a graph 110 illustrating a gamut 111, which is identical to the graph 100 of FIG. 4 except that the graph 110 illustrates several superimposed gamut components where the green laser was tuned to multiple specific wavelengths between apexes Green A and Green B. FIG. 6 is a graph 120 of a complete gamut 121 of the above-described embodiment, which illustrates the graph 110 without the superimposed gamut components.

With reference back to FIG. 5, note that not all wavelength settings are necessarily required for the tunable green laser. For example, if the green laser were only tuned between vertex locations Green A and Green C, which is approximately between 501nm and 547 nm, nearly all of the color gamut between the red corner and Green C would still be displayed. In other words, by modulating the green laser through much, though not all, of the variable wavelengths, much of the color gamut may still be displayed, while saving the cost, time, and effort of modulating the green laser through all of its wavelengths. This could save operating and/or developing costs.

Example 2: Extended Red, Tunable Blue, Tunable Green

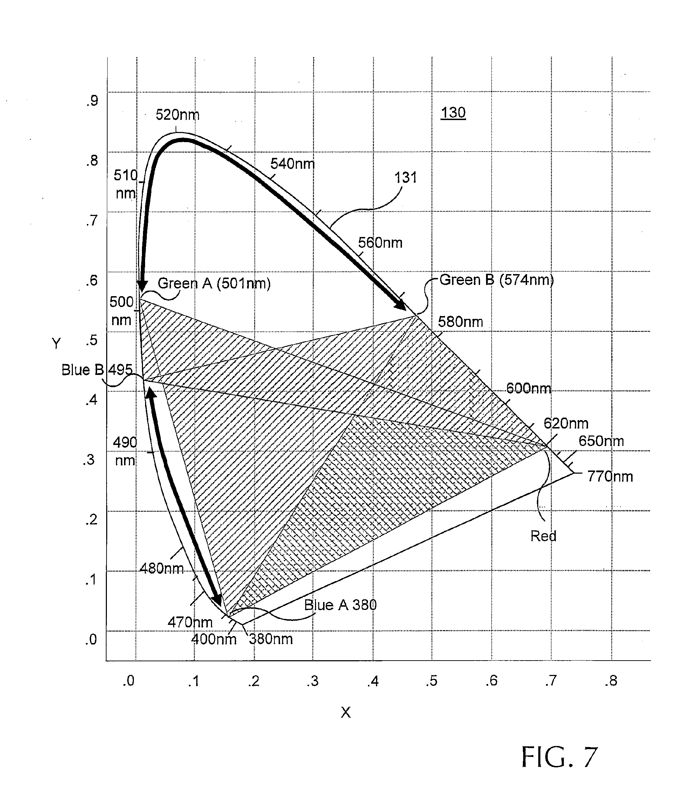

The missing portion of the visible blue gamut apparent in FIG. 6 may be included in the gamut by using a lower wavelength red combined with a tunable blue laser, in addition to the wide-band tunable green laser of FIG. 6, as illustrated in FIG. 7.

Differently from the example described above, this embodiment includes two tunable lasers, the green tunable laser described above and a blue tunable laser as illustrated in the gamut 131 of a graph 130. In this embodiment the blue laser is tunable between approximately 380nm (Blue A), and 495 nm (Blue B). Much like the superimposed gamuts described above, there can be as many or as few separate gamuts between red, Blue A and Blue B as desired to optimize speed vs. performance for a given application. Fewer gamuts, i.e., a larger tuning granularity of the blue laser, results in some missing colors of the extreme blue gamut, while a fine granularity preserves all or nearly all of the blue colors.

Example 3: Extended Red, Widely Tunable Green (or Blue-green)

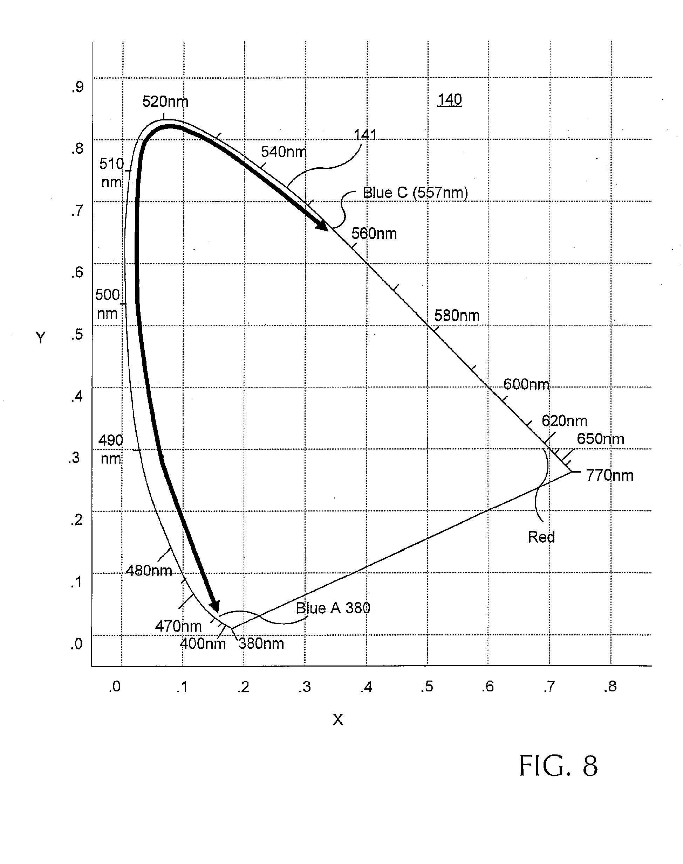

By extending the range of a single tunable laser and using the extended red of example 2, all colors of the visible spectrum may be rendered as shown in FIG 8, which shows a graph 140 of a gamut 141. The embodiment in this example displays all of the visible colors discernible to the human eye.

In this embodiment a fixed red laser generates the saturated red color as illustrated. This red laser is combined with a very widely tunable blue laser, which is tunable between points Blue A, approximately 380 nm, and Blue C, approximately 557 nm. This may alternatively be referred to as a blue-green laser because it is tunable over much of the saturated blue and saturated green colors.

Example 4: Extended Blue, Widely Tunable Green (or red-green)

Conversely, using the other side of the visible spectrum as fixed, all visible colors may be rendered using a widely tunable red-green laser. In other words, as a converse to the embodiment illustrated in FIG. 8, which has a fixed red laser and a widely tunable blue-green laser, the embodiment of this example may include a fixed blue laser and a widely tunable laser that moves between full red and green, for example to approximately between 770nm and 501nm (not illustrated). As laser technology develops, the cost and performance (such as power output vs stability, purity, etc.) of widely tunable lasers of various wavelength ranges may dictate whether this configuration is better or worse than the ones described above.

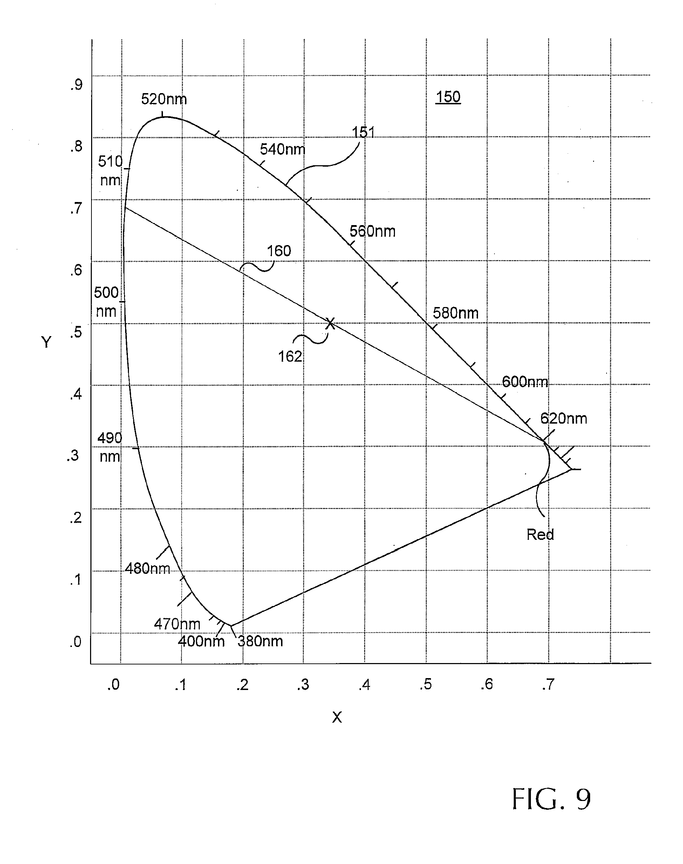

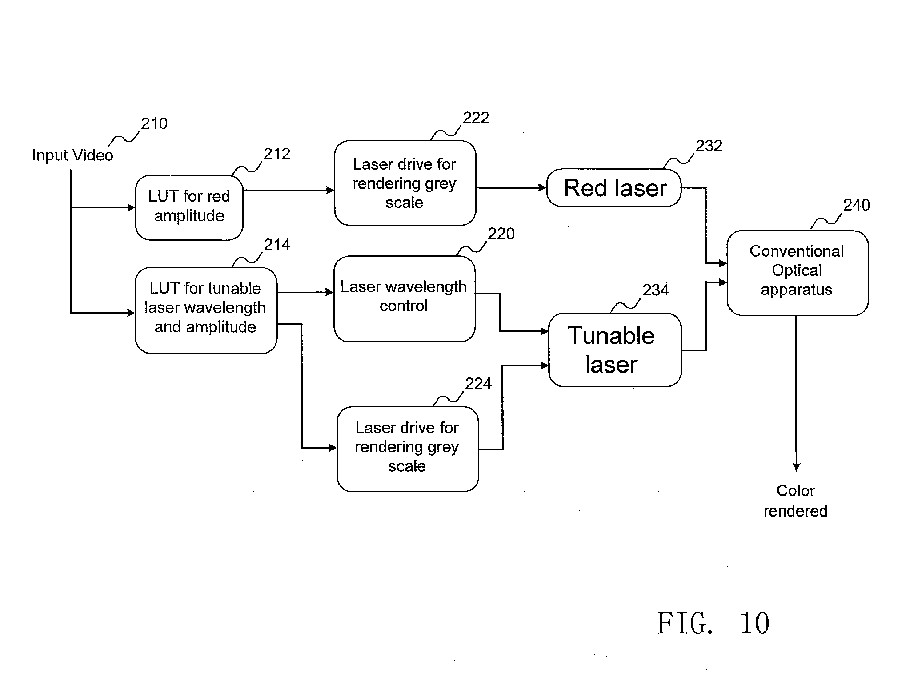

An example apparatus and method describing how the above-described embodiments can be used to render video is described with reference to FIGs 9 and 10.

Standard video color coding methods include YCbCr (and associated YUV), RGB and, more appropriate for extended gamut technologies, XYZ as used in the DCI Specification. Standards already exist for converting from any of these to CIE 1931 XYZ and xyY. These standards vary depending on the particular video being rendered. The DCI Standard of XYZ color data is directly convertible to the xyY coordinate system, of which the xy plane is illustrated in FIGs 1-8 above. Then, from the xy coordinates just calculated, or determined, the wavelength to be generated by a tunable laser may be created.

For the case of using a single widely tunable blue-green laser and a single fixed red laser, described above with reference to FIG. 8 above, consider the following example color to be rendered having example coordinates x=0.34 and y=0.5.

Using linear mixing methods standard in the art, and as illustrated in FIG. 9, a line 160 connects the red xy coordinates through the coordinates for example color 162. The line 160 then intersects with the color gamut horseshoe curve 151 at coordinates corresponding to the wavelength to be generated by the tunable laser. A lookup table may be pre-calculated for all XYZ values used using resolution required for increments to be less than 1 Just Noticeable Difference. Note that laser output amplitudes for the target color and luminance may be determined standard methods involving first the conversion of the laser xyY coordinates to XYZ coordinates, and then solving two out of three of the following system of equations for Gamp and Ramp, the green and red laser amplitudes, respectively: Y = Gamp*GY + Ramp*Ry, X = Gamp*GX + Ramp*RX and Z = Gamp*GZ + Ramp*RZ. Again, these values may be precalculated and controlled in a real-time system via corresponding look-up tables.

Likewise, all four examples described above may use this or similar methods for converting standard video input to desired wavelength and amplitudes. For example, using fixed red and blue lasers and a tunable green laser, if the input color y is above red laser y, the input color x value may be used to find the corresponding horseshoe y, given by the intersection of a vertical line from the input color, or in the case of a narrower tunable green, a line to the closest available wavelength. This gives the horseshoe xy coordinates and therefore the wavelength desired for proper color generation. Again, look-up tables may be used to minimize the time or energy of calculating wavelengths, which may take more processing power or time than is available to calculate the appropriate wavelength and modulate the tunable laser to the desired wavelength.

An additional optimization of this general method for determining what wavelength to use in the case of three lasers with one or more tunable, involves optimization relative to the upper limit of modulation speed. For the less agile tunable laser, a combination of laser wavelength modulation and laser intensity modulation may be used for many colors. For example, in the case of the fixed red and blue and tunable green laser just mentioned above, many colors are common to a multiplicity of color gamuts defined by the multiplicity of green laser wavelengths. While rendering a raster scanned image, if the previous color rendered used the green wavelength w0 and if the system of equations for Gamp, Ramp and Bamp have realizable solutions using w0 for the present target color, then the green laser does not need to be wavelength modulated, but perhaps amplitude modulated, which is in general much easier to perform. Thus the tunable laser need not be modulated unless the video color is determined to fall outside the gamut for the present tunable wavelength. Further, a look-ahead method may be used to anticipate the wavelength modulation of a given tunable laser, taking into acount all colors which need to be rendered over a given time interval, and calculating a wavelength trajectory over time which accomodates all the required colors. Thus relatively slow repetition rate tunable lasers may feasibly render natural video at high definition resolutions in real time.

FIG. 10 is a block diagram of an example system 200 using embodiments of the invention. The system 200 includes a fixed red laser and widely tunable blue-green laser as described above with reference to FIG. 8.

The system 200 includes a video input 210, which is fed to a pair of look up tables (LUT) 212, 214. The first LUT 212 is for determining an amplitude of the red component of the resulting video, while the second LUT 214 is for determining an amplitude as well as a desired wavelength for another component. Recall that the wavelength of the red generator, such as a red laser, is fixed, and therefore the system 200 need not calculate a wavelength for red. Also, in some embodiments, either or both of the LUTs 212, 214 may be eliminated and the values may be calculated from the input video 210 using the system described above with reference to FIG. 9.

After the LUTs 212, 214 generate their appropriate values, a laser wavelength controller 220 modulates a tunable laser 234 to the desired wavelength for proper color generation. In other words, the wavelength controller 220 determines where on the color horseshoe curve the saturated color signal will originate from.

A pair of laser drives 222, 224 generate the appropriate power output, or other controllable parameter to drive their connected lasers 232, 234 to generate the proper amplitude signal. The combination of the outputs of the lasers 232, 234 are combined to make the desired color, as determined from the input video 210. Once the desired output color is created, the system 200 then generates a pixel or other part of a display through a conventional optical apparatus 240. For instance, the color generated by combining the lasers 232, 234 may be projected onto a screen using a DLP (Digital Light Processor), or other form of projection technology.

Of course, the system 200 is described with reference to a fixed red laser and a tunable blue-green laser. The other embodiments described above may be embodied in systems using separate LUTs, laser drives, wavelength controls, and lasers commensurate with the number of lasers used in such systems.

Having described and illustrated the principles of the invention with reference to illustrated embodiments, it will be recognized that the illustrated embodiments may be modified in arrangement and detail without departing from such principles, and may be combined in any desired manner. And although the foregoing discussion has focused on particular embodiments, other configurations are contemplated. In particular, even though expressions such as "according to an embodiment of the invention" or the like are used herein, these phrases are meant to generally reference embodiment possibilities, and are not intended to limit the invention to particular embodiment configurations. As used herein, these terms may reference the same or different embodiments that are combinable into other embodiments.

Consequently, in view of the wide variety of permutations to the embodiments described herein, this detailed description and accompanying material is intended to be illustrative only, and should not be taken as limiting the scope of the invention. What is claimed as the invention, therefore, is all such modifications as may come within the scope of the following claims and equivalents thereto.

## Claims

1. A video display system comprising:
an input for accepting a video signal;
a color generator coupled to the input and structured to determine a desired color from the video signal;
one or more tunable lasers; and
a laser wavelength controller coupled between the color generator and the one or more tunable lasers, the laser wavelength controller structured to drive at least one of the one or more lasers to one of a plurality of light-generating wavelengths.

2. The display system of claim 1 in which the color generator comprises:
a color calculator structured to generate an output based on an input from the video signal; or
one or more look up tables.

3. The display system of claim 1 in which the one or more tunable lasers comprise:
a red laser having a fixed wavelength output;
a blue laser having a fixed wavelength output; and
a tunable green laser having a variable wavelength output; or
a tunable green laser structured to be modulated to produce two or more output values between approximately 501 nm and 574 nm.

4. The display system of claim 1 in which the one or more tunable lasers comprise:
a red laser having a fixed wavelength output;
a tunable blue laser having a variable wavelength output; and
a tunable green laser having a variable wavelength output; or
a red laser having a fixed wavelength output; and
a widely tunable blue-green laser having a variable wavelength output.

5. The display system of claim 4 in which the blue-green laser is tunable between about 380 nm and 557 nm.

6. A method of generating a display, comprising
accepting a video signal;
generating a desired color to be displayed from the video signal; and
tuning one or more tunable lasers to generate an output signal for the display that correlates to the desired color.

7. The method of generating a display of claim 6, further comprising:
generating a wavelength control from the desired color and in which tuning the one or more tunable lasers comprises applying the wavelength control to the one or more tunable lasers.

8. The method of generating a display of claim 6, further comprising:
generating one or more power driving signals for the one or more tunable lasers based on the desired color, and driving the one or more tunable lasers with the respective one or more power driving signals.

9. The method of generating a display of claim 6 in which tuning one or more tunable lasers comprises driving a green laser to produce an output between approximately 501 nm and 574 nm.

10. The method of generating a display of claim 6 in which the one or more tunable lasers are structured to generate all of the colors of the visible gamut, but in which tuning one or more tunable lasers to generate an output signal comprises generating less than all of the colors of the visible gamut.

11. The method of generating a display of claim 10, in which the one or more tunable lasers is a green laser structured to be tunable between approximately 501 nm and 574 nm, but in which the green laser is driven between approximately 501 and 547 nm.

12. A method of driving a video output display, comprising:
accepting a video signal at an input;
decoding the video signal into component color parts;
generating a color signal from the component color parts;
driving one or more tunable lasers with the color signal; and
combining outputs from the one or more tunable lasers to produce an output signal; and
transmitting the output signal to the video output display.

13. The method of driving a video output display of claim 12, in which generating a color signal comprises applying a transform to the component color parts.

14. The method of driving a video output display of claim 12, further comprising generating one or more wavelength control signals from the color signal.

15. The method of driving a video output display of claim 12 in which transmitting the output signal to the video output display comprises driving a DLP.
